# EUROPEAN PATENT APPLICATION

(11) **EP 2 854 285 A1**
(43) Date of publication of application: **01.04.2015**
(21) Application number: 14185291.3
(22) Date of filing: 18.09.2014
(51) Int. Cl.: H02P 29/00, H02P 27/08, H02P 6/08, H02M 7/5395

(54) **Motor-driven compressor**

(30) Priority: 27.09.2013 JP 2013201771
(71) Applicant: KABUSHIKI KAISHA TOYOTA JIDOSHOKKI, Kariya-shi, Aichi 448-8671 (JP)
(72) Inventor: Fukasaku, Hiroshi, Kariya-shi,, Aichi 448-8671 (JP); Nagata, Yoshiki, Kariya-shi,, Aichi 448-8671 (JP)
(74) Representative: TBK

(57) **Abstract**

A motor-driven compressor includes a compression portion, an electric motor, a motor drive circuit having switching element, a temperature detector, and a switcher, which switches the drive mode of the motor drive circuit. When acquiring information indicating that the temperature detected by the temperature detector has increased and reached a first preset temperature, the switcher switches the drive mode of the motor drive circuit from a first drive mode to a second drive mode. Also, when acquiring information indicating that the temperature detected by the temperature detector has increased and reached a second preset temperature, which is higher than the first preset temperature, the switcher switches the drive mode of the motor drive circuit from the first drive mode or the second drive mode to a third drive mode.

## Description

### BACKGROUND OF THE INVENTION

The present invention relates to a motor-driven compressor.

For example, a motor-driven compressor disclosed in Japanese Laid-Open Patent Publication No. 2005-201108 includes a compression portion, which compresses and discharges refrigerant, an electric motor, which drives the compression portion, and a motor drive circuit, which drives the electric motor.

In general, the pulse width modulation (PWM) control is employed as a method for controlling electric motors. The motor drive circuit controls the drive voltage of the electric motor through the pulse width modulation. Specifically, a PWM signal is generated with a high-frequency triangular wave signal, which is referred to as a carrier wave, and a voltage command signal for commanding a voltage. Based on the PWM signal, the switching elements perform switching, so that the motor drive circuit converts a DC voltage to an AC voltage. The obtained AC voltage is applied, as the drive voltage, to the electric motor to control the driving of the electric motor.

Methods for controlling a motor drive circuit include three-phase modulation control and two-phase modulation control. In the two-phase modulation control, switching performed by the switching elements is less frequent than that in the three-phase modulation control. Thus, the two-phase modulation control is advantageous in suppressing the heat generation due to switching of the switching elements. However, since the two-phase modulation control has a greater fluctuation in the current of the electric motor compared to the three-phase modulation control, a greater noise is generated at switching of the switching elements. Thus, when executing the two-phase modulation control, the frequency (carrier frequency) of the triangular wave signal may be increased to reduce the noise due to switching of the switching elements. However, the higher the carrier frequency, the more frequent the switching of the switching elements becomes. Accordingly, the heat generated due to switching of the switching elements is increased, so that the temperature of the switching elements is raised. If the switching elements are heated to an excessively high temperature, the switching elements can be damaged.

### SUMMARY OF THE INVENTION

Accordingly, it is an objective of the present invention to provide a motor-driven compressor that suppresses heat generation in switching elements, while minimizing the noise due to the switching of the switching elements.

To achieve the foregoing objective and in accordance with one aspect of the present invention, a motor-driven compressor is provided that includes a compression portion, an electric motor, which drives the compression portion, a motor drive circuit, which drives the electric motor and has a switching element for converting a DC voltage into an AC voltage, a temperature detector, which detects a temperature of the switching element, and a switcher, which switches a drive mode of the motor drive circuit to one of a first drive mode, a second drive mode, and a third drive mode, which are determined by a carrier frequency and modulation control. When acquiring information indicating that the temperature detected by the temperature detector has increased and reached a first preset temperature, the switcher switches the drive mode of the motor drive circuit from the first drive mode to the second drive mode. When acquiring information indicating that the temperature detected by the temperature detector has increased and reached a second preset temperature, which is higher than the first preset temperature, the switcher switches the drive mode of the motor drive circuit from the first drive mode or the second drive mode to the third drive mode.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a cross-sectional side view illustrating a motor-driven compressor according to one embodiment;
Fig. 2 is a circuit diagram of a motor drive circuit;
Fig. 3A is a graph showing fluctuation of the current of the electric motor in the two-phase modulation control;
Fig. 3B is a graph showing fluctuation of the current of the electric motor in the three-phase modulation control;
Fig. 4A is a graph showing fluctuation of the output voltage of the motor drive circuit in the two-phase modulation control;
Fig. 4B is a graph showing fluctuation of the output voltage of the motor drive circuit in the three-phase modulation control;
Fig. 5 is an explanatory chart showing a first drive mode, a second drive mode, and a third drive mode; and
Fig. 6 is a graph showing changes in the temperature of the switching elements.

### DETAILED DESCRIPTION OF THE PREFERRED EMBODIMENTS

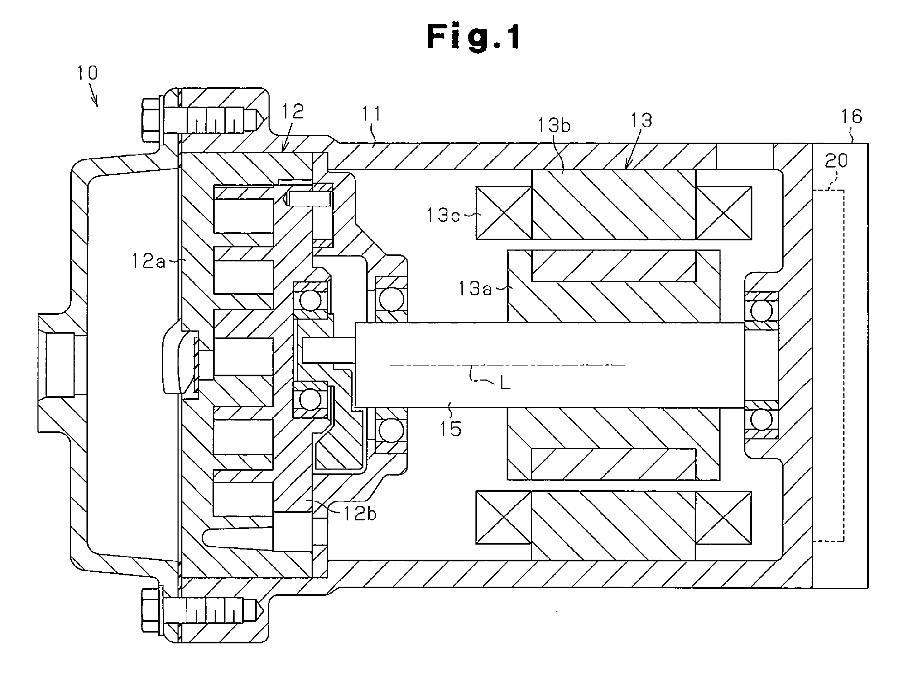

A motor-driven compressor 10 according to one embodiment will now be described with reference to Figs. 1 to 6. The motor-driven compressor 10 of the present embodiment is mounted on a vehicle and employed for a vehicle air conditioner.

As shown in Fig. 1, the motor-driven compressor 10 has a housing 11, which accommodates a compression portion 12 and an electric motor 13. The compression portion 12 compresses and discharges refrigerant, and the electric motor 13 drives the compression portion 12. The compression portion 12 includes a fixed scroll 12a, which is fixed in the housing 11, and an orbiting scroll 12b, which is arranged to be opposed to the fixed scroll 12a. The electric motor 13 includes a rotor 13a and a stator 13b. The rotor 13a is fixed to a rotary shaft 15 to rotate integrally with the rotary shaft 15, and the stator 13b is fixed to the inner circumferential surface of the housing 11.

A cover 16 is attached to the bottom wall of the housing 11. The cover 16 and the bottom wall of the housing 11 define a space that accommodates a motor drive circuit 20 (indicated by a broken line in Fig. 1) for driving the electric motor 13. In the present embodiment, the compression portion 12, the electric motor 13, and the motor drive circuit 20 are arranged in the order along the axis L of the rotary shaft 15.

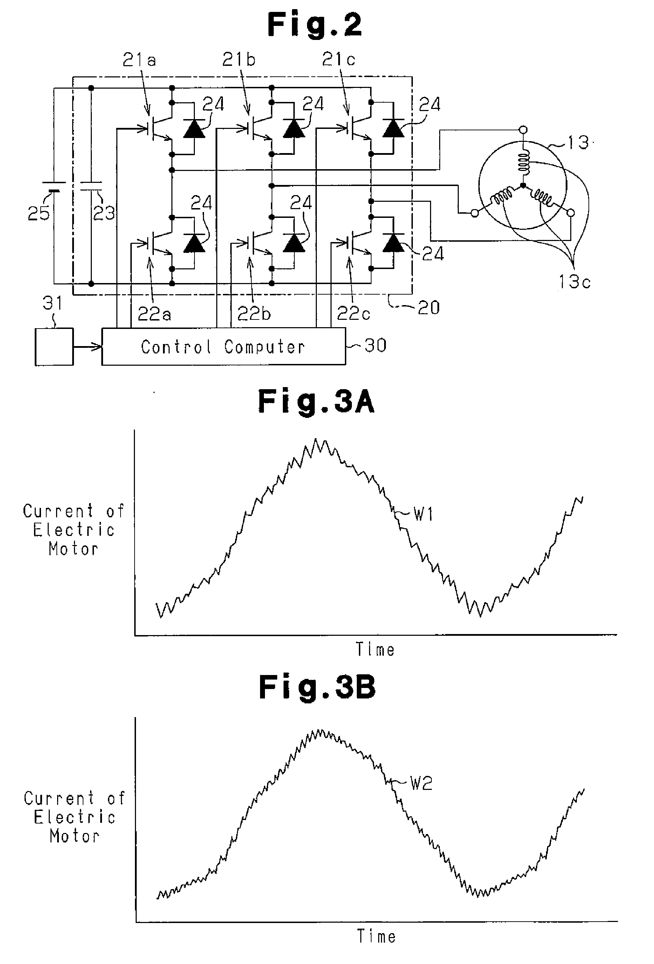

As shown in Fig. 2, the motor drive circuit 20 has a plurality of switching elements 21 a, 21 b, 21 c, 22a, 22b, 22c and a current smoothing capacitor 23. The switching elements 21 a, 21 b, 21 c, 22a, 22b, 22c are each connected to a diode 24. The diodes 24 return electromotive force generated in the electric motor 13 back to a DC power source 25.

The switching elements 21a, 21b, 21c, 22a, 22b, 22c are connected to a control computer 30 so that signals can be transmitted therebetween. The collectors of the switching elements 21a, 21b, 21c are connected to a DC power source 25, and the emitters of the switching elements 21a, 21b, 21c are connected to a coil 13c of the electric motor 13. The emitters of the switching elements 22a, 22b, 22c are connected to the DC power source 25, and the collectors of the switching elements 22a, 22b, 22c are connected to the coil 13c of the electric motor 13.

The motor drive circuit 20 controls the drive voltage of the electric motor 13 through the pulse width modulation. Specifically, the switching elements 21 a, 21 b, 21 c, 22a, 22b, 22c perform switching based on a PWM signal, so that the motor drive circuit 20 converts a DC voltage to an AC voltage. The obtained AC voltage is applied, as the drive voltage, to the electric motor 13 to control the driving of the electric motor 13.

The control computer 30 generates a PWM signal with a high-frequency triangular wave signal, which is referred to as a carrier wave, and a voltage command signal for commanding a voltage value, and supplies the PWM signal to the bases of the switching elements 21a, 21b, 21c, 22a, 22b, 22c. A temperature sensor 31 is electrically connected to the control computer 30. The temperature sensor 31 serves as a temperature detector that detects the temperature of the switching elements 21 a, 21 b, 21 c, 22a, 22b, 22c. The temperature sensor 31 of the present embodiment is a thermistor that is located in the vicinity of the switching elements 21 a, 21 b, 21 c, 22a, 22b, 22c. Information detected by the temperature sensor 31, or the detection result, is delivered to the control computer 30.

The control computer 30 stores a control program for switching the drive mode of the motor drive circuit 20 to one of a first drive mode M1, a second drive mode M2, and a third drive mode M3, which are determined based on the carrier frequency and the modulation control. The "carrier frequency" refers to the frequency of the triangular wave signal. Therefore, the control computer 30 functions as a switcher that switches the drive mode of the motor drive circuit 20 to one of the first drive mode M1, the second drive mode M2, and the third drive mode M3. That is, the control computer 30 selects, as the drive mode of the motor drive circuit 20, one of the first drive mode M1, the second drive mode M2, and the third drive mode M3.

Fig. 3A shows fluctuations of the current of the electric motor 13 in the two-phase modulation control, and Fig. 3B shows fluctuations of the current of the electric motor 13 in the three-phase modulation control. The fluctuation of a waveform W1 shown in Fig. 3A is greater than the fluctuation of a waveform W2 shown in Fig. 3B. Thus, the two-phase modulation control has a greater fluctuation in the current of the electric motor 13 compared to the three-phase modulation control, and a greater noise is generated during switching of the switching elements 21 a, 21 b, 21 c, 22a, 22b, 22c.

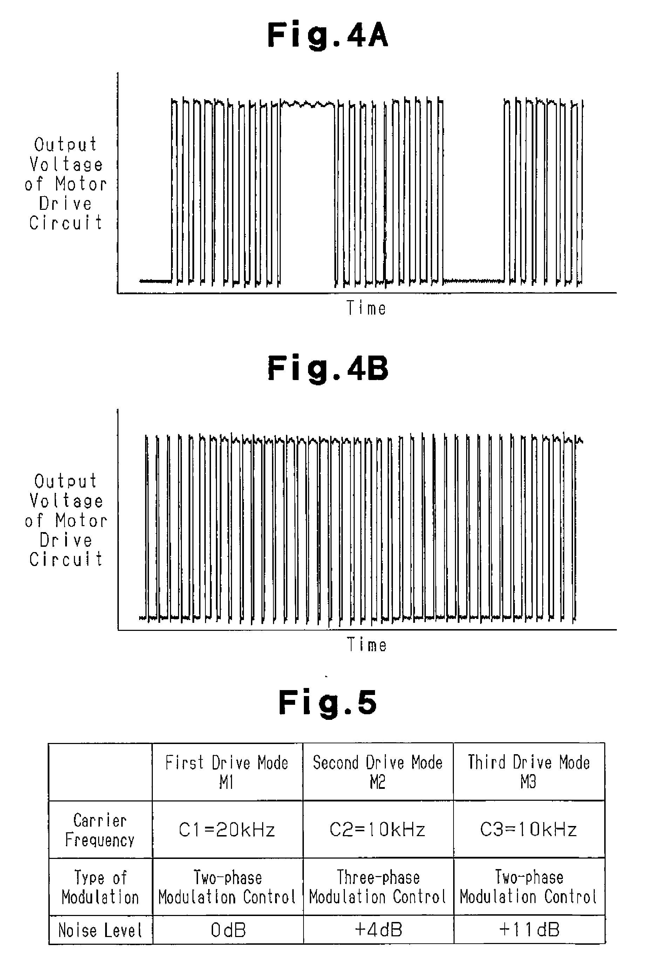

Fig. 4A shows the fluctuation of the output voltage of the motor drive circuit 20 in the two-phase modulation control, and Fig. 4B shows the fluctuation of the output voltage of the motor drive circuit 20 in the three-phase modulation control. In the three-phase modulation control, each of the switching elements 21a, 21b, 21c, 22a, 22b, 22c constantly performs switching each time the rotor 13a rotates 360°. Inthe two-phase modulation control, one of the switching elements 21a, 21b, 21c, 22a, 22b, 22c stops performing switching each time the rotor 13a rotates 60°. That is, the switching element of one of the three phases is sequentially stopped, and, at the same time, the switching elements of the other two phases perform switching. Thus, in the two-phase modulation control, the switching elements 21 a, 21 b, 21 c, 22a, 22b, 22c perform switching less frequently than in the three-phase modulation control.

As shown in Fig. 5, in the first drive mode M1, the motor drive circuit 20 is driven through the two-phase modulation control by using a preset first carrier frequency C1 (20 kHz in the present embodiment). In the present embodiment, the first carrier frequency C1 has a frequency outside the audible range.

In the second drive mode M2, the motor drive circuit 20 is driven through the three-phase modulation control by using a second carrier frequency C2 (10 kHz in the present embodiment), which has a lower frequency than the first carrier frequency C1. In the present embodiment, the second carrier frequency C1 has a frequency within the audible range.

In the third drive mode M3, the motor drive circuit 20 is driven through the two-phase modulation control by using a third carrier frequency C3 (10 kHz in the present embodiment), which has a lower frequency than the first carrier frequency C1. In the present embodiment, the third carrier frequency C3 has a frequency within the audible range.

The control computer 30 stores a control program to switch the drive mode of the motor drive circuit 20 from the first drive mode M1 to the second drive mode M2 when acquiring information that indicates that the temperature detected by the temperature sensor 31 has increased and reached a first preset temperature T1. The first preset temperature is preferably set in a range between 60°C and 80°C, inclusive. In the present embodiment, the first preset temperature is set to 70°C.

The control computer 30 stores another control program to switch the drive mode of the motor drive circuit 20 from the second drive mode M2 to the third drive mode M3 when acquiring information that indicates that the temperature detected by the temperature sensor 31 has increased and reached a second preset temperature T2, which is higher than the first preset temperature T1. The second preset temperature is preferably set in a range between 80°C and 100°C, inclusive. In the present embodiment, the second preset temperature is set to 90°C. The heat resistant temperature of the switching elements 21 a, 21 b, 21 c, 22a, 22b, 22c is 150°C.

The control computer 30 stores a control program, according to which, in a state in which the motor drive circuit 20 is being driven in the third drive mode M3, when receiving information indicating that the temperature detected by the temperature sensor 31 has dropped to a third preset temperature T3, which is lower than the second present temperature T2, the control computer 30 switches from the third drive mode M3 to the second drive mode M2. The third preset temperature T3 is set to be higher than the first preset temperature T1. In the present embodiment, the third preset temperature T3 is set to 85°C.

Further, the control computer 30 stores a control program, according to which, in a state in which the motor drive circuit 20 is being driven in the second drive mode M2, when receiving information indicating that the temperature detected by the temperature sensor 31 has dropped to a fourth preset temperature T4, which is lower than the first present temperature T1, the control computer 30 switches from the second drive mode M2 to the first drive mode M1. In the present embodiment, the fourth preset temperature T4 is set to 65°C.

In the present embodiment, the first preset temperature T1, the second preset temperature T2, the third preset temperature T3, and the fourth preset temperature T4 are set to not exceed the heat resistance temperature of the switching elements 21 a, 21 b, 21 c, 22a, 22b, 22c such that the temperature range in which the motor drive circuit 20 is driven in the first drive mode M1 is wider than the temperature ranges in which the motor drive circuit 20 is driven in the second drive mode M2 and the third drive mode M3, respectively. Also, the first preset temperature T1, the second preset temperature T2, the third preset temperature T3, and the fourth preset temperature T4 are set to not exceed the heat resistance temperature of the switching elements 21 a, 21 b, 21 c, 22a, 22b, 22c, such that the temperature range in which the motor drive circuit 20 is driven in the third drive mode M3 is narrower than the temperature range in which the motor drive circuit 20 is driven in the second drive mode M2.

Operation of the present embodiment will now be described.

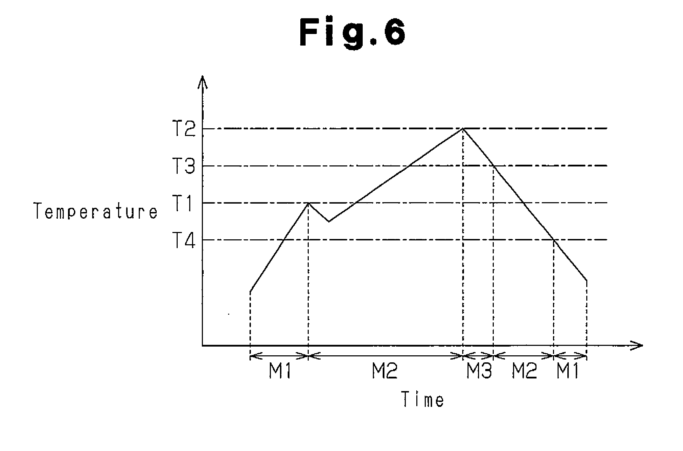

As shown in Fig. 6, the motor drive circuit 20 is driven in the first drive mode M1 until the temperature detected by the temperature sensor 31 is raised to reach the first preset temperature T1. In the first drive mode M1, the motor drive circuit 20 is driven at the first carrier frequency C1, which is higher than the second carrier frequency C2 and the third carrier frequency C3. Thus, the noise due to switching of the switching elements 21 a, 21 b, 21 c, 22a, 22b, 22c is suppressed in the first drive mode M1 compared to a case in which the motor drive circuit 20 is driven in the second drive mode M2 or the third drive mode M3. In the present embodiment, the noise due to switching of the switching elements 21 a, 21 b, 21 c, 22a, 22b, 22c in the first drive mode M1 is 0 dB.

In the first drive mode M1, the two-phase modulation control is executed. In the first drive mode M1, the motor drive circuit 20 is driven at the first carrier frequency C1, which is higher than the second carrier frequency C2 and the third carrier frequency C3. Thus, even if the two-phase modulation control is executed, the noise due to switching of the switching elements 21a, 21b, 21c, 22a, 22b, 22c is low in the first drive mode M1. Therefore, when the motor drive circuit 20 is driven in the first drive mode M1, heat generation in the switching elements 21a, 21b, 21c, 22a, 22b, 22c is suppressed compared to a case in which the three-phase modulation control is executed.

Thereafter, when the temperature detected by the temperature sensor 31 is raised and reaches the first preset temperature T1, the control computer 30 switches the drive mode of the motor drive circuit 20 from the first drive mode M1 to the second drive mode M2.

In the second drive mode M2, the motor drive circuit 20 is driven by using the second carrier frequency C2, which is lower than the first carrier frequency C1. Thus, switching of the switching elements 21 a, 21 b, 21 c, 22a, 22b, 22c is less frequent in the second drive mode M2 than that in a case in which the motor drive circuit 20 is driven in the first drive mode M1, so that heat generation in the switching elements 21 a, 21 b, 21 c, 22a, 22b, 22c is suppressed.

Further, since the three-phase modulation control is performed in the second drive mode M2, the current of the electric motor 13 fluctuate to a smaller extent than in the two-phase modulation control, so that the noise generated due to switching of the switching elements 21a, 21b, 21c, 22a, 22b, 22c is low. In the present embodiment, the noise due to switching of the switching elements 21 a, 21 b, 21 c, 22a, 22b, 22c in the second drive mode M2 is +4 dB.

When the temperature detected by the temperature sensor 31 is raised and reaches the second preset temperature T2, the control computer 30 switches the drive mode of the motor drive circuit 20 from the second drive mode M2 to the third drive mode M3.

In the third drive mode M3, the motor drive circuit 20 is driven by using the third carrier frequency C3, which is lower than the first carrier frequency C1. Thus, switching of the switching elements 21 a, 21 b, 21 c, 22a, 22b, 22c is less frequent than that in a case in which the motor drive circuit 20 is driven in the first drive mode M1, so that heat generation in the switching elements 21 a, 21 b, 21 c, 22a, 22b, 22c is suppressed.

In the third drive mode M3, the two-phase modulation control is executed. Thus, in the third drive mode M3, the switching elements 21 a, 21 b, 21 c, 22a, 22b, 22c perform switching less frequently than in the three-phase modulation control. Thus, the heat generation in the switching elements 21 a, 21 b, 21 c, 22a, 22b, 22c is suppressed in the third drive mode M3 compared to a case in which the motor drive circuit 20 is driven in the second drive mode M2. In the present embodiment, the noise due to switching of the switching elements 21 a, 21 b, 21 c, 22a, 22b, 22c in the third drive mode M3 is +11 dB.

The second preset temperature T2 is set to be higher than the first preset temperature T1. Therefore, in the third drive mode M3, for example, the motor drive circuit 20 can be driven until the temperature of the switching elements 21 a, 21 b, 21 c, 22a, 22b, 22c reaches the limit of the heat resistance temperature. The motor drive circuit 20 thus can be driven in a wide temperature range. In other words, the motor-driven compressor 10 can be operated in a wide temperature range.

As described above, the drive mode of the motor drive circuit 20 is switched to one of the first drive mode M1, the second drive mode M2, and the third drive mode M3 based on the temperature detected by the temperature sensor 31. This suppresses heat generation in the switching elements 21 a, 21 b, 21 c, 22a, 22b, 22c while minimizing the noise due to switching of the switching elements 21 a, 21 b, 21 c, 22a, 22b, 22c. As a result, the switching elements 21 a, 21 b, 21 c, 22a, 22b, 22c are prevented from being excessively heated and thus from being damaged.

In a state in which the motor drive circuit 20 is driven in the third drive mode M3, when receiving information indicating that the temperature detected by the temperature sensor 31 has dropped to the third preset temperature T3, which is lower than the second present temperature T2, the control computer 30 switches the drive mode of the motor drive circuit 20 from the third drive mode M3 to the second drive mode M2. Therefore, the motor drive circuit 20 is prevented from being driven in the third drive mode M3 when the temperature detected by the temperature sensor 31 is still sufficiently separate from the second preset temperature T2. Thus, the motor drive circuit 20 is driven in the second drive mode M2, in which the noise due to switching of the switching elements 21 a, 21 b, 21 c, 22a, 22b, 22c is lower than in the third drive mode M3.

In a state in which the motor drive circuit 20 is driven in the second drive mode M2, when receiving information indicating that the temperature detected by the temperature sensor 31 has dropped to the fourth preset temperature T4, which is lower than the first present temperature T1, the control computer 30 switches the drive mode of the motor drive circuit 20 from the second drive mode M2 to the first drive mode M1. Therefore, the motor drive circuit 20 is prevented from being driven in the second drive mode M2 when the temperature detected by the temperature sensor 31 is still sufficiently separate from the first preset temperature T1. Thus, the motor drive circuit 20 is driven in the first drive mode M1, in which the noise due to switching of the switching elements 21 a, 21 b, 21 c, 22a, 22b, 22c is lower than in the second drive mode M2.

The above described embodiment provides the following advantages.
(1) The control computer 30 switches the drive mode of the motor drive circuit 20 from the first drive mode M1 to the second drive mode M2 when acquiring information that indicates that the temperature detected by the temperature sensor 31 has increased and reached the first preset temperature T1. Also, the control computer 30 switches the drive mode of the motor drive circuit 20 from the second drive mode M2 to the third drive mode M3 when acquiring information that indicates that the temperature detected by the temperature sensor 31 has increased and reached the second preset temperature T2, which is higher than the first preset temperature T1.
   Accordingly, the motor drive circuit 20 is driven in one of the first drive mode M1, the second drive mode M2, and the third drive mode M3, which are different in the frequency of the switching of the switching elements 21 a, 21 b, 21 c, 22a, 22b, 22c, which is determined by the carrier frequency and the modulation control, and in the amount of heat generation of the switching elements 21 a, 21 b, 21 c, 22a, 22b, 22c. As described above, the drive mode of the motor drive circuit 20 is switched to one of the first drive mode M1, the second drive mode M2, and the third drive mode M3 based on the temperature detected by the temperature sensor 31. This suppresses heat generation in the switching elements 21 a, 21 b, 21 c, 22a, 22b, 22c while minimizing the noise due to switching of the switching elements 21 a, 21 b, 21 c, 22a, 22b, 22c.
(2) In the first drive mode M1, the motor drive circuit 20 is driven at the first carrier frequency C1, which is higher than the second carrier frequency C2 and the third carrier frequency C3. Thus, the noise due to switching of the switching elements 21 a, 21 b, 21 c, 22a, 22b, 22c is suppressed in the first drive mode M1 compared to a case in which the motor drive circuit 20 is driven in the second drive mode M2 or the third drive mode M3. Further, in the first drive mode M1, the motor drive circuit 20 is driven at the first carrier frequency C1, which is higher than the second carrier frequency C2 and the third carrier frequency C3. Thus, even if the two-phase conversion control is executed, the noise due to switching of the switching elements 21a, 21b, 21c, 22a, 22b, 22c is low. Therefore, when the motor drive circuit 20 is driven in the first drive mode M1, heat generation in the switching elements 21 a, 21b, 21c, 22a, 22b, 22c is suppressed compared to a case in which the three-phase modulation control is executed.
(3) In the second drive mode M2, the motor drive circuit 20 is driven by using the second carrier frequency C2, which is lower than the first carrier frequency C1. Thus, switching of the switching elements 21 a, 21 b, 21 c, 22a, 22b, 22c is less frequent than that in a case in which the motor drive circuit 20 is driven in the first drive mode M1, so that heat generation in the switching elements 21 a, 21 b, 21 c, 22a, 22b, 22c is suppressed. Further, since the three-phase modulation control is performed in the second drive mode M2, the current of the electric motor 13 fluctuate to a smaller extent than in the two-phase modulation control, so that the noise generated due to switching of the switching elements 21 a, 21 b, 21 c, 22a, 22b, 22c is low.
(4) In the third drive mode M3, the motor drive circuit 20 is driven by using the third carrier frequency C3, which is lower than the first carrier frequency C1. Thus, switching of the switching elements 21 a, 21 b, 21 c, 22a, 22b, 22c is less frequent in the third drive mode M3 than that in a case in which the motor drive circuit 20 is driven in the first drive mode M1, so that heat generation in the switching elements 21 a, 21 b, 21 c, 22a, 22b, 22c is suppressed. In the third drive mode M3, the two-phase modulation control is executed. Thus, switching of the switching elements 21 a, 21 b, 21 c, 22a, 22b, 22c is less frequent than that in the three-phase modulation control, and the heat generation in the switching elements 21 a, 21 b, 21 c, 22a, 22b, 22c is suppressed compared to a case in which the motor drive circuit 20 is driven in the second drive mode M2.
(5) The control computer 30 switches the drive mode of the motor drive circuit 20 from the third drive mode M3 to the second drive mode M2 when acquiring information that indicates that the temperature detected by the temperature sensor 31 has dropped to the third preset temperature T3, which is lower than the second preset temperature T2. Also, the control computer 30 switches the drive mode of the motor drive circuit 20 from the second drive mode M2 to the first drive mode M1 when acquiring information that indicates that the temperature detected by the temperature sensor 31 has dropped to the fourth preset temperature T4, which is lower than the first preset temperature T1.
   Accordingly, even after the drive mode of the motor drive circuit 20 is switched to the third drive mode M3 by the control computer 30 based on an increase in the temperature detected by the temperature sensor 31, the drive mode of the motor drive circuit 20 can be switched from the third drive mode M3 to the second drive mode M2. Also, even after the drive mode of the motor drive circuit 20 is switched to the second drive mode M2 by the control computer 30 based on an increase in the temperature detected by the temperature sensor 31, the drive mode of the motor drive circuit 20 can be switched from the second drive mode M2 to the first drive mode M1. In this manner, the motor drive circuit 20 can be driven with its drive mode switched to the optimum one in accordance with the temperature condition.
(6) The first preset temperature T1, the second preset temperature T2, the third preset temperature T3, and the fourth preset temperature T4 are set to not exceed the heat resistance temperature of the switching elements 21 a, 21 b, 21 c, 22a, 22b, 22c such that the temperature range in which the motor drive circuit 20 is driven in the first drive mode M1 is wider than the temperature ranges in which the motor drive circuit 20 is driven in the second drive mode M2 and the third drive mode M3, respectively. This expands the temperature range in which the motor drive circuit 20 is driven in the first drive mode M1, in which the noise due to switching of the switching elements 21 a, 21 b, 21 c, 22a, 22b, 22c is lowest among the first to third drive modes M1, M2, and M3. This minimizes the noise due to switching of the switching elements 21 a, 21 b, 21 c, 22a, 22b, 22c.
(7) The first preset temperature T1, the second preset temperature T2, the third preset temperature T3, and the fourth preset temperature T4 are set to not exceed the heat resistance temperature of the switching elements 21 a, 21 b, 21 c, 22a, 22b, 22c, such that the temperature range in which the motor drive circuit 20 is driven in the third drive mode M3 is narrower than the temperature range in which the motor drive circuit 20 is driven in the second drive mode M2. This narrows the temperature range in which the motor drive circuit 20 is driven in the third drive mode M3, in which the noise due to switching of the switching elements 21 a, 21 b, 21 c, 22a, 22b, 22c is loudest among the first to third drive modes M1, M2, and M3. This minimizes the noise due to switching of the switching elements 21 a, 21 b, 21 c, 22a, 22b, 22c.
(8) The control computer 30 switches the drive mode of the motor drive circuit 20 from the second drive mode M2 to the first drive mode M1 when the temperature detected by the temperature sensor 31 has dropped to the fourth preset temperature T4, which is lower than the first preset temperature T1. Therefore, for example, the motor drive circuit 20 is prevented from being driven in the second drive mode M2 when the temperature detected by the temperature sensor 31 is still sufficiently separate from the first preset temperature T1.
(9) The second preset temperature T2 is set to be higher than the first preset temperature T1. Therefore, in the third drive mode M3, for example, the motor drive circuit 20 can be driven until the temperature of the switching elements 21 a, 21 b, 21 c, 22a, 22b, 22c reaches the limit of the heat resistance temperature. The motor drive circuit 20 thus can be driven in a wide temperature range.

The above described embodiment may be modified as follows.

In the above illustrated embodiment, the control computer 30 may control the motor drive circuit 20 to start being driven in the second drive mode M2. That is, when activating the motor-driven compressor 10, the motor drive circuit 20 is driven in the second drive mode M2 if the temperature detected by the temperature sensor 31 is higher than the first preset temperature T1.

In the illustrated embodiment, the control computer 30 may switch the drive mode of the motor drive circuit 20 from the first drive mode M1 to the third drive mode M3 based on the temperature detected by the temperature sensor 31.

In the illustrated embodiment, the control computer 30 may switch the drive mode of the motor drive circuit 20 from the third drive mode M3 to the first drive mode M1 based on the temperature detected by the temperature sensor 31.

In the illustrated embodiment, the control computer 30 may switch the drive mode of the motor drive circuit 20 from the second drive mode M2 to the first drive mode M1 when the temperature detected by the temperature sensor 31 drops to a predetermined temperature after a predetermined time period has elapsed from when the drive mode was switched, for example, from the first drive mode M1 to the second drive mode M2. Likewise, the control computer 30 may switch the drive mode of the motor drive circuit 20 from the third drive mode M3 to the second drive mode M2 when the temperature detected by the temperature sensor 31 drops to a predetermined temperature after a predetermined time period has elapsed from when the drive mode was switched, for example, from the second drive mode M2 to the third drive mode M3.

In the illustrated embodiment, the control computer 30 may switch the drive mode of the motor drive circuit 20 by selecting one of the first drive mode M1, the second drive mode M2, and the third drive mode M3 based on a value calculated based on the temperature detected by the temperature sensor 31.

In the illustrated embodiment, the control computer 30 may switch the drive mode of the motor drive circuit 20 by selecting one of the first drive mode M1, the second drive mode M2, and the third drive mode M3 based on a map that uses the temperature detected by the temperature sensor 31.

In the illustrated embodiment, the three-phase conversion control may be executed in the first drive mode M1.

In the illustrated embodiment, the first carrier frequency C1 may be higher than 20 kHz.

In the illustrated embodiment, the third carrier frequency C3 may be lower than the second carrier frequency C2.

In the illustrated embodiment, a thermocouple or a radiation thermometer may be used as the temperature sensor 31.

In the illustrated embodiment, the cover 16 may be fixed to the peripheral wall of the housing 11, and the motor drive circuit 20 may be accommodated in the space defined by the peripheral wall of the housing 11 and the cover 16.

In the illustrated embodiment, the compression portion 12 may be a piston type or a vane type.

In the illustrated embodiment, the motor-driven compressor 10 may be used in any type of air conditioner instead of a vehicle air conditioner.

Therefore, the present examples and embodiments are to be considered as illustrative and not restrictive and the invention is not to be limited to the details given herein, but may be modified within the scope and equivalence of the appended claims.

A motor-driven compressor includes a compression portion, an electric motor, a motor drive circuit having switching element, a temperature detector, and a switcher, which switches the drive mode of the motor drive circuit. When acquiring information indicating that the temperature detected by the temperature detector has increased and reached a first preset temperature, the switcher switches the drive mode of the motor drive circuit from a first drive mode to a second drive mode. Also, when acquiring information indicating that the temperature detected by the temperature detector has increased and reached a second preset temperature, which is higher than the first preset temperature, the switcher switches the drive mode of the motor drive circuit from the first drive mode or the second drive mode to a third drive mode.

## Claims

1. A motor-driven compressor comprising:
a compression portion (12);
an electric motor (13), which drives the compression portion (12);
a motor drive circuit (20), which drives the electric motor (13), wherein the motor drive circuit (20) has a switching element (21 a-21 c, 22a-22c) for converting a DC voltage into an AC voltage;
a temperature detector (31), which detects a temperature of the switching element (21 a-21 c, 22a-22c); and
a switcher (30), which switches a drive mode of the motor drive circuit (20) to one of a first drive mode (M1), a second drive mode (M2), and a third drive mode (M3), which are determined by a carrier frequency and modulation control, wherein
when acquiring information indicating that the temperature detected by the temperature detector (31) has increased and reached a first preset temperature (T1), the switcher (30) switches the drive mode of the motor drive circuit (20) from the first drive mode (M1) to the second drive mode (M2), and
when acquiring information indicating that the temperature detected by the temperature detector (31) has increased and reached a second preset temperature (T2), which is higher than the first preset temperature (T1), the switcher (30) switches the drive mode of the motor drive circuit (20) from the first drive mode (M1) or the second drive mode (M2) to the third drive mode (M3).

2. The motor-driven compressor according to claim 1, wherein
in the first drive mode (M1), two-phase modulation control is executed by using a predetermined first carrier frequency (C1),
in the second drive mode (M2), three-phase modulation control is executed by using a second carrier frequency (C2), which is lower than the first carrier frequency (C1), and
in the third drive mode (M3), two-phase modulation control is executed by using a third carrier frequency (C3), which is lower than the first carrier frequency (C1).

3. The motor-driven compressor according to claim 2, wherein
the first carrier frequency (C1) is outside the audible range,
the second carrier frequency (C2) is within the audible range, and
the third carrier frequency (C3) is within the audible range.

4. The motor-driven compressor according to claim 2, wherein
when acquiring information indicating that the temperature detected by the temperature detector (31) has dropped to a third preset temperature (T3), which is lower than the second preset temperature (T2), the switcher (30) switches the drive mode of the motor drive circuit (20) from the third drive mode (M3) to the second drive mode (M2), and
when acquiring information indicating that the temperature detected by the temperature detector (31) has dropped to a fourth preset temperature (T4), which is lower than the first preset temperature (T1), the switcher (30) switches the drive mode of the motor drive circuit (20) from the second drive mode (M2) or the third drive mode (M3) to the first drive mode (M1).

5. The motor-driven compressor according to claim 4, wherein the first preset temperature (T1), the second preset temperature (T2), the third preset temperature (T3), and the fourth preset temperature (T4) are set to not exceed a heat resistance temperature of the switching element (21a-21c, 22a-22c) such that a temperature range in which the motor drive circuit (20) is driven in the first drive mode (M1) is wider than a temperature range in which the motor drive circuit (20) is driven in the second drive mode (M2) and a temperature range in which the motor drive circuit (20) is driven in the third drive mode (M3).

6. The motor-driven compressor according to claim 5, wherein the first preset temperature (T1), the second preset temperature (T2), the third preset temperature (T3), and the fourth preset temperature (T4) are set to not exceed the heat resistance temperature of the switching element (21a-21c, 22a-22c) such that a temperature range in which the motor drive circuit (20) is driven in the third drive mode (M3) is narrower than the temperature range in which the motor drive circuit (20) is driven in the second drive mode (M2).

7. The motor-driven compressor according to any one of claims 1 to 6, wherein
the first preset temperature (T1) is set in a range between 60°C and 80°C, inclusive, and
the second preset temperature (T2) is set in a range between 80°C and 100°C, inclusive.
